(19) Europäisches Patentamt
European Patent Office
Office européen des brevets

(11) Veröffentlichungsnummer : **0 141 055**
**B1**

(12) # EUROPÄISCHE PATENTSCHRIFT

(45) Veröffentlichungstag der Patentschrift : **01.10.86**

(51) Int. Cl.[4] : **C 08 G 65/48**

(21) Anmeldenummer : **84108734.9**

(22) Anmeldetag : **24.07.84**

(54) **Verfahren zur Brommethylierung von Polyphenylenethern.**

(30) Priorität : **21.09.83 DE 3334068**

(43) Veröffentlichungstag der Anmeldung : **15.05.85 Patentblatt 85/20**

(45) Bekanntmachung des Hinweises auf die Patenterteilung : **01.10.86 Patentblatt 86/40**

(84) Benannte Vertragsstaaten : **AT BE CH DE FR GB IT LI NL**

(56) Entgegenhaltungen :
**DE-B- 2 027 162**
**US-A- 3 262 911**

(73) Patentinhaber : **HÜLS AKTIENGESELLSCHAFT**
**Patentabteilung / PB 15 - Postfach 13 20**
**D-4370 Marl 1 (DE)**

(72) Erfinder : **Grundmann, Raban, Dr.**
**Ludwigshafener Strasse 6**
**D-4370 Marl (DE)**

**EP 0 141 055 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Polyphenylenether (PPE), welche man gemäß US-PSS 33 06 874 und 33 06 875 aus bevorzugt alkylsubstituierten Phenolen an komplexbildenden Mitteln, z. B. Kupferbromid und Dibutylamin, unter oxidierender Kondensation herstellt, sind wohlbekannte Stoffe, welche besonders in Kunststoffabmischungen Anwendung finden und je nach Ausgangsstoffen, Substituenten, Cokondensaten oder Mischungen die unterschiedlichsten Eigenschaften aufweisen.

Aus den unten genannten Gründen ist es erwünscht, über PPE zu verfügen, welche Brommethylgruppen an den Phenylenkernen tragen.

Aus der Literatur, z. B. DE-ASS 20 09 065 und 20 47 613, sind zwar summarische Aufzählungen bekannt, welche unter den vielen verschiedenen für $R_1$ bis $R_5$ genannten Substituenten auch die Brommethylgruppe nennen, doch wird kein solcher beschrieben, so daß weder die wirkliche Position einer solchen Gruppe noch die irgendwelcher anderer Substituenten oder gar ein Weg zur Herstellung des Stoffes offenbart sind.

Demgegenüber fällt eine Vielzahl von Schriften, darunter DE-ASS 20 37 510 und 26 16 746, auf, welche grundsätzlich im Falle eines Halogenkohlenwasserstoffrestes als Substituent wenigstens zwei Kohlenstoffatome zwischen dem Halogenatom und dem Phenolkern fordern und die Möglichkeit, Brommethylgruppen einzufügen, fern legen.

Es war daher überraschend, daß man PPE gemäß der in den Patentansprüchen 1 bis 5 definierten Verfahrensweise brommethylieren kann.

Die Brommethylierung ist eine an sich wohlbekannte Umsetzung der Aromaten. Eine Zusammenstellung findet sich bei Houben-Weyl, Methoden der organischen Chemie, Band V/4 (1960), Seiten 484 bis 487. Seite 487 lehrt aber, daß Phenole durch Polykondensation mit dem Formaldehyd ausweichen ; da diese bekannte und hier völlig unerwünschte Phenolharzbildung auch mit Phenolethern eintritt (vgl. Kunststoff-Handbuch Band X, Seite 22, Carl-Hauser-Verlag 1968 und Ullmanns Encyklopädie der technischen Chemie, 4. Auflage/1979, Band 18, Seite 248), war es unerwartet, daß man PPE ohne unerwünschte Vernetzungen mit Formaldehyd umsetzen kann.

Aus DE-B-2 027 162 war die Brommethylierung mittels Formaldehyd und Bromwasserstoff in Gegenwart einer Carbonsäure bekannt. Hierbei werden jedoch niedrigmolekulare Benzolkohlenwasserstoffe umgesetzt, die im Reaktionsmedium löslich sind. Diese Umsetzung legt die Brommethylierung der hochmolekularen, unlöslichen Polyphenylenether nicht nahe. Ferner beschreibt die US-A-3 262 911 die Herstellung brommethylgruppenhaltiger PPE durch direkte Halogenierung. Nachteilig ist hierbei aber, daß als unerwünschte Nebenreaktionen die Mehrfachhalogenierung der Methylgruppen sowie die Kernhalogenierung auftritt, worauf die Schrift in Spalte 8, Zeile 57 und in Spalte 9, Zeile 57 hinweist.

Es war überraschend, daß man die Brommethylierung der polymeren PPE mit gutem Umsatz ausführen kann, obwohl der polymere Stoff in den üblicherweise verwendeten Carbonsäuren (Essigsäure, Propionsäure) nicht oder kaum löslich ist.

Schließlich ist es bekannt, daß Ether durch Halogenwasserstoffe spaltbar sind ; da die Brommethylierung die Gegenwart beträchtlicher Mengen Bromwasserstoff voraussetzt, war es unerwartet, daß die Umsetzung der PPE ohne bemerkenswerte Spaltung verlaufen könnte.

Zusammengefaßt sprach alles gegen die beanspruchte Arbeitsweise.

Als Ausgangsstoff eignen sich PPE der allgemeinen Formel

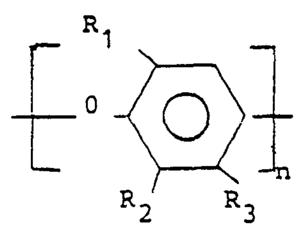

mit

$R_1$, $R_2$ = Methyl, Ethyl, Propyl oder Butyl,
$R_3$ = H oder $R_1$, $R_2$,
n = 3 bis 600 ;

insbesondere setzt man Poly(2.6-dimethyl-1.4-phenylen)-ether mit einem Polymerisationsgrad n = 10 bis 300 ein.

Das Molekulargewicht brauchbarer PPE ist grundsätzlich nicht begrenzt. Sehr gut einsetzbar sind PPE mit Lösungsviskositäten zwischen J = 0.1 und 0.9 dl/g, vorzugsweise zwischen 0.4 und 0.65 dl/g, gemessen in Chloroform bei 30 °C. Das Verfahren ist jedoch auch besonders für niedrigmolekulare PPE-Typen mit einem Polymerisationsgrad n = 3 bis 30 geeignet.

Als Reaktionsmedium verwendet man ganz allgemein aliphatische oder aromatische Carbonsäuren mit 2 bis 12 Kohlenstoffatomen, z. B. Essigsäure, Propionsäure, Buttersäure, Chloressigsäure, Benzoesäure. Auch Mischungen mit anderen Lösemitteln, wie Chlorkohlenwasserstoffen, Ethern, Estern oder Kohlenwasserstoffen, führen zu guten Ergebnissen. Vorzugsweise arbeitet man in Essigsäure, Propionsäure oder einer Essigsäure/Chloroform-Mischung. Die eingesetzte Menge an flüssigem Reaktionsmedium beträgt das 2- bis 20fache der PPE-Menge, vorzugsweise das 5- bis 10fache.

PPE sind bei den beanspruchten Reaktionsbedingungen im allgemeinen unlöslich. Aus diesem Grunde arbeitet man in Suspension, so daß es empfehlenswert ist, PPE in zerkleinerter Form, bevorzugt 2 bis 200 µm, insbesondere etwa 5 bis 50 µm, einzusetzen. PPE von niedrigem Molekulargewicht können, insbesondere bei großer Verdünnung und erhöhter Temperatur, auch überwiegend oder teilweise gelöst sein.

Indessen war es unerwartet, daß die beanspruchte Reaktion auch und gerade mit nicht gelöstem PPE mit hohem Umsatz gelingt.

Den Formaldehyd kann man sowohl gasförmig als auch in gelöster Form, insbesondere jedoch in fester, polymerer Form, als Paraformaldehyd, dem Reaktionsgemisch zusetzen. Es ist möglich, die Gesamtmenge zu Beginn der Reaktion mit dem PPE vorzulegen oder aber im Verlauf der Reaktion kontinuierlich oder portionsweise Formaldehyd nachzudosieren. Pro Phenoleinheit setzt man 0.02 bis 4 Mol Formaldehyd, vorzugsweise 1 bis 2.5 Mol, zu.

Den Bromwasserstoff dosiert man im Verlauf der Reaktion gasförmig oder als Lösung, vorzugsweise als Lösung in einer Carbonsäure, zu. Die Reaktion läßt sich unter einem Überdruck an HBr durchführen. Es ist z. B. auch möglich, HBr aus einem anorganischen Bromid (z. B. NaBr, KBr, $NH_4Br$) durch Zugabe einer starken Säure (z. B. $H_2SO_4$) freizusetzen. In diesem Falle suspendiert man das PPE beispielsweise in Essigsäure zusammen mit Paraformaldehyd und fein gepulvertem Natriumbromid und tropft ein Gemisch aus konzentrierter Schwefelsäure und Essigsäure bei 60 bis 80 °C zu. Insgesamt setzt man pro Phenoleinheit 0.02 bis 5 Mol HBr, vorzugsweise 1 bis 2.5 Mol, ein. Die Reaktionstemperatur liegt zwischen 20 und 150 °C, vorzugsweise 60 und 130 °C und insbesondere 70 und 100 °C. Die Reaktionsdauer setzt sich aus einer Dosierzeit von 0.5 bis 8 Std. und einer Nachreaktionszeit von 1 bis 12 Std. zusammen, abhängig von der Größe des Ansatzes und von dem beabsichtigten Brommethylierungsgrad.

Man kann die Reaktion chargenweise, aber auch kontinuierlich durchführen.

Man trennt das brommethylierte Produkt durch Filtration oder Zentrifugieren ab, wäscht mit verdünnter Sodalösung und Wasser neutral und trocknet. Zur Reinigung ist eine Umfällung zu empfehlen, wobei beispielsweise Chloroform als Lösungsmittel und Methanol als Fällungsmittel verwendet werden können.

Die Reaktionsprodukte weisen Bromgehalte von 1 bis 37,6 %, vorzugsweise von 10 bis 30 % auf. Charakteristisch für die Produkte ist ein Gewichtsverlust bei der thermogravimetrischen Untersuchung im Temperaturbereich 250 bis 325 °C, welcher zwischen 2 und 40 % liegt und aus der Tabelle, die sich auf die Beispiele bezieht, ersichtlich ist.

Die erfindungsgemäßen brommethylierten PPE können als Zwischenprodukte zur Herstellung funktionalisierter Polymerer eingesetzt werden. So ist beispielsweise eine chemische Umwandlung von Brommethyl zu Hydroxymethyl oder Methylphosphonsäure möglich, so daß eine Vielzahl abgewandelter PPE zugänglich wird.

Insbesondere eignen sich die erfindungsgemäßen PPE unmittelbar als Flammschutzmittel für Kunststoffe, da sie einerseits infolge ihrer polymeren Struktur nicht zum Ausschwitzen neigen, andererseits aber eine Zersetzungstemperatur im erwünschten Bereich aufweisen.

## Beispiel 1

In einer mit $N_2$ gespülten 2-l-Rührapparatur mit Tropftrichter und Rückflußkühler suspendiert man in 1 l Essigsäure 144 g (1.2 Mol) feingepulverten Poly(2.6-dimethyl-1.4-phenylen)ether (mit einer Lösungsviskosität von J = 0.6 dl/g in $CHCl_3$ bei 30 °C) bei 70 °C. Man setzt 45 g (1.5 Mol) Paraformaldehyd zu und tropft im Verlauf von 2 Std. 400 g einer 30 %igen Lösung von HBr in Essigsäure zu (1.5 Mol HBr). Den Ansatz rührt man 10 Std. bei 90 °C nach. Nach dem Abkühlen trennt man den Feststoff ab, wäscht auf einer Nutsche mit viel Wasser nach und trocknet dann im Vakuumschrank bei 50 °C. Man erhält einen hellbeigen Feststoff.

Ausbeute : 152 g (86 % d. Th.) ; Bromgehalt : 13.9 % ;
Viskositätszahl J = 0,54 dl/g.
Die thermische Stabilität zeigt die Tabelle.

## Beispiel 2

Analog zu Beispiel 1 setzt man 60 g (0.5 Mol) PPE (J = 0.55 dl/g) in 500 ml Propionsäure mit 60 g (2 Mol) Paraformaldehyd und 122 g (1.5 Mol) HBr, gelöst in 300 ml Propionsäure, bei 90 °C in 3 Std. um. Den Ansatz rührt man 6 Std. bei 110 °C nach. Die Aufarbeitung erfolgt wie in Beispiel 1.

Ausbeute : 88 g beiger Feststoff ; Bromgehalt : 26 %. Aus dem Bromgehalt geht hervor, daß mehr als jeder zweite Phenylenkern eine Brommethylgruppe trägt. Die thermische Stabilität ist aus der Tabelle ersichtlich.

Beispiel 3

Man löst 60 g PPE (J = 0.55 dl/g) in 500 ml Chloroform, versetzt mit 300 ml Essigsäure und setzt die Lösung in einer 2 l-Rührapparatur bei 60 °C in mehreren Portionen mit insgesamt 90 g (3 Mol) Paraformaldehyd und 426 g (2.1 Mol) einer 40 %igen HBr in Essigsäure im Verlauf von 8 Std. um. Die Nachrührzeit beträgt 8 Std. bei 85 °C. Nach dem Absaugen und Waschen des hellbraunen Feststoffes löst man diesen in Chloroform und fällt in einem 10fachen Überschuß Aceton aus. Das hellbeige Endprodukt wird bei 50 °C getrocknet.

Ausbeute : 91 g ; Bromgehalt : 29.8 % ; Viskositätszahl J = 0.51 dl/g.

Beispiel 4

In einer 1 l-Rührapparatur mit Tropftrichter löst man 15 g (0.125 Mol) PPE (J = 0.23 dl/g) in 200 g geschmolzener Benzoesäure bei 125 °C unter Stickstoff versetzt mit 15 g (0.5 Mol) Paraformaldehyd und tropft im Verlauf von 3 Std. 150 g einer 27 %igen HBr in Propionsäure zu. Dann dosiert man nochmals 5 g Paraformaldehyd und 50 g der HBr-Lösung nach. Man rührt die Mischung 8 Std. bei 110 °C nach.

Man verdünnt mit 700 ml Essigsäure, saugt den Feststoff ab und wäscht mit viel Wasser nach. Das getrocknete Produkt ist hellocker gefärbt.

Ausbeute : 26 g ; Bromgehalt : 36,3 % ; Viskositätszahl J = 0.18 dl/g.

Für einen einfach brommethylierten PPE errechnet sich ein Bromgehalt von 37.6 %.
Die thermische Stabilität ist aus der Tabelle erkennbar.

Tabelle

Die thermogravimetrische Untersuchung wurde mit einem TGA 950, Du Pont, bei einer Heizrate von 10 °C/min durchgeführt (Stickstoff-Atmosphäre) :

| Beispiel | Gewichtsverlust in % | | | | |
|---|---|---|---|---|---|
| | 250 °C | 275 °C | 300 °C | 325 °C | 350 °C |
| 1 | 1 | 1,5 | 7 | 12 | 16 |
| 2 | 1 | 3 | 12 | 23 | 28 |
| 4 | 2 | 7 | 20 | 35 | 40 |
| reines PPE (zum Vergleich) | 1 | 1 | 1 | 1 | 1 |

**Patentansprüche**

1. Verfahren zur Brommethylierung von Polyphenylenethern durch Umsetzung mit Formaldehyd und Bromwasserstoff in Gegenwart einer Carbonsäure bei Temperaturen von 20 bis 150 °C, dadurch gekennzeichnet, daß man als Polyphenylenether einen der allgemeinen Formel

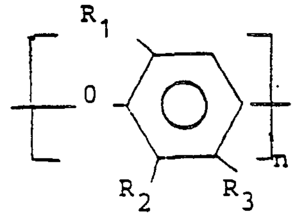

mit

$R_1$, $R_2$ = Methyl, Ethyl, Propyl, Butyl,
$R_3$ = H oder $R_1$, $R_2$,
n = 3 bis 600

einsetzt und pro Phenylenkern 0.02 bis 1 Brommethylgruppen einführt.

2. Verfahren nach Anspruch 1, dadurch gekennzeichnet, daß man als Ausgangsmaterial Poly(2.6-dimethyl-1.4-phenylen)ether mit einem Polymerisationsgrad n = 10 bis 300 einsetzt.

3. Verfahren nach Anspruch 1 und 2, dadurch gekennzeichnet, daß man als Carbonsäuren Essigsäure, Propionsäure oder Benzoesäure verwendet.

4. Verfahren nach Anspruch 1 bis 3, dadurch gekennzeichnet, daß man den Formaldehyd als Paraformaldehyd zusetzt.

5. Verfahren nach Anspruch 1 bis 4, dadurch gekennzeichnet, daß man den Bromwasserstoff gasförmig in das Reaktionsgemisch aus Polyphenylenether und Formaldehyd einleitet oder eine Lösung des Bromwasserstoffes in einer Carbonsäure zudosiert.

6. Brommethylierte Polyphenylenether mit einem Bromgehalt von 1 bis 37,6 Gew.-% sowie einem Gewichtsverlust von 2 bis 40 Gew.-% im Temperaturbereich von 250 bis 325 °C bei der thermogravimetrischen Analyse, hergestellt nach einem Verfahren gemäß Ansprüchen 1 bis 5.

7. Verwendung der brommethylierten Polyphenylenether gemäß Anspruch 1 bis 6 als Flammschutzmittel in Kunststoffen.

**Claims**

1. A process for the bromomethylation of a polyphenyl ether by reaction with formaldehyde and hydrogen bromide in the presence of a carboxylic acid at a temperature of 20 to 150 °C, characterised in that a polyphenyl ether of the general formula

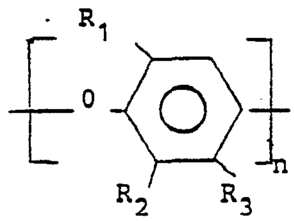

is used in which

$R^1$ and $R^2$ are methyl, ethyl, propyl or butyl,

$R^3$ is hydrogen or has one of the meanings given for $R^1$ and $R^2$, and

n is 3 to 600, and 0.02 to 1 bromomethyl group is introduced per benzene nucleus.

2. A process according to claim 1, characterised in that poly(2,6-dimethyl-1,4-phenylene) ether with a degree of polymerisation (n) of 10 to 300 is used as starting material.

3. A process according to claim 1 or 2, characterised in that acetic acid, propionic acid or benzoic acid is used as carboxylic acid.

4. A process according to any of claims 1 to 3, characterised in that the formaldehyde is introduced in the form of paraformaldehyde.

5. A process according to any of claims 1 to 4, characterised in that the hydrogen bromide is passed in gaseous form into the reaction mixture of polyphenyl ether and formaldehyde or a solution of the hydrogen bromide in a carboxylic acid is introduced.

6. Bromomethylated polyphenyl ether having a bromine content of 1 to 37.6 % by weight and a weight loss of 2 to 40 % by weight in the temperature range 250 to 325 °C by thermogravimetric analysis, produced by a process according to any of claims 1 to 5.

7. The use of a bromomethylated polyphenyl ether according to any of claims 1 to 6 as a flame retardant in plastics.

**Revendications**

1. Procédé pour la bromométhylation d'éthers polyphényléniques, par réaction sur du formaldéhyde et du bromure d'hydrogène en présence d'un acide carboxylique, à des températures de 20 à 150 °C, caractérisé par le fait qu'on utilise, comme éther polyphénylénique, un éther de la formule générale

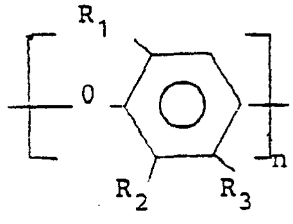

dans laquelle

$R_1$ et $R_2$ représentent un groupe méthyle, éthyle, propyle, butyle,

$R_3$ représente de l'hydrogène ou est identique à $R_1$ ou $R_2$, et

n est un nombre d'une valeur de 3 à 600,

et qu'on introduit, par noyau phénylène, de 0,02 à 1 groupe bromométhyle.

2. Procédé selon la revendication 1, caractérisé par le fait qu'on utilise, comme matière de départ, un éther poly(2,6-diméthyl-1,4-phénylénique) d'un degré de polymérisation n d'une valeur de 10 à 300.

3. Procédé selon la revendication 1 ou 2, caractérisé par le fait qu'on utilise, comme acides carboxyliques, l'acide acétique, l'acide propionique ou l'acide benzoïque.

4. Procédé selon les revendications 1 à 3, caractérisé par le fait qu'on ajoute le formaldéhyde à l'état de paraformaldéhyde.

5. Procédé selon les revendications 1 à 4, caractérisé par le fait qu'on introduit le bromure d'hydrogène à l'état gazeux dans le mélange réactionnel obtenu à partir d'éther polyphénylénique et de formaldéhyde, ou qu'on ajoute une solution du bromure d'hydrogène dans un acide carboxylique.

6. Les éthers polyphényléniques bromométhylés, d'une teneur en brome de 1 à 37,6 % en poids, et accusant, lors d'une analyse thermogravimétrique, une perte pondérale de 2 à 40 % en poids dans un domaine de température de 250 à 325 °C, qui sont préparés selon les procédés des revendications 1 à 5.

7. L'utilisation des éthers polyphényléniques bromométhylés selon les revendications 1 à 6, en tant qu'agents de protection contre les flammes dans des matières plastiques.